# EUROPÄISCHE PATENTSCHRIFT

(11) **EP 0 829 416 B1**
(45) Veröffentlichungstag und Bekanntmachung des Hinweises auf die Patenterteilung: **03.11.2004**
(21) Anmeldenummer: 97110467.4
(22) Anmeldetag: 26.06.1997
(51) Int. Cl.: B62D 6/00, B62D 9/00, B60T 8/00

(54) **Vorrichtung und Verfahren zur Lenkung eines Kraftfahrzeuges**
Method and apparatus for steering a motor vehicle
Procédé et dispositif de direction pour véhicule automobile

(30) Priorität: 09.08.1996 DE 19632251
(43) Veröffentlichungstag der Anmeldung: 18.03.1998
(73) Patentinhaber: Volkswagen Aktiengesellschaft, 38436 Wolfsburg (DE)
(72) Erfinder: Lissel, Ernst, Dipl.-Ing., 38442 Wolfsburg (DE); Binfet-Kull, Maria, Dipl.-Ing., 38476 Barwedel (DE)

(56) Entgegenhaltungen:
- DE-A- 2 120 745
- DE-C- 19 605 553
- US-A- 5 323 866

## Beschreibung

Die Erfindung betrifft eine Vorrichtung zur Lenkung eines Kraftfahrzeuges mit mindestens zwei lenkbaren Rädern, welche eine Lenkeinrichtung zur Einstellung der Position der lenkbaren Räder in Abhängigkeit eines Lenksollsignals und eine Einrichtung zur Erzeugung eines Lenkverhaltens des Kraftfahrzeuges im Fehlerfall der Lenkeinrichtung aufweist, sowie ein Verfahren zur Lenkung eines Kraftfahrzeuges, bei dem von einer Lenkeinrichtung die Einstellung der Position der Räder zur Erzeugung eines Lenkverhaltens in Abhängigkeit eines Lenksollsignals erfolgt.

Bei elektrischen Lenksystemen für Kraftfahrzeuge, den sogenannten Steer-by-Wire-Systemen, wie sie beispielsweise aus der Patentschrift US-5,247,441 bekannt sind, handelt es sich um sicherheitskritische Einrichtungen. Um den hohen Sicherheitsanforderungen zu genügen, sind ihre Baugruppen, beispielsweise ihre Steuereinrichtungen oder ihre Aktuatoren zur Einstellung der Positionen der lenkbaren Räder redundant und damit sehr aufwendig ausgelegt. Insbesondere bei elektrischen Lenksystemen, bei denen die Räder unabhängig voneinander und ohne Verbindung zueinander gelenkt werden, ist es aus Bauraumgründen schwierig, die Aktuatoren redundant auszuführen. Zudem ist diese Redundanz auch technisch schwer zu realisieren und gibt dem System eine geringere Verfügbarkeit.

Aus der gattungsgemäßen deutschen Offenlegungsschrift DE-41 12 284 A1 ist eine Fahrzeuglenkverhalten-Steuervorrichtung für ein Kraftfahrzeug bekannt, welche eine Antiblockier-Bremseinrichtung aufweist. Die Steuereinrichtung erzeugt in Abhängigkeit eines einen Fahrzeuglenkzustand wiedergebenden Signals eine Differenz zwischen den Bremskräften, die an den jeweils innenliegenden und außenliegenden Rädern anliegt, so daß ein Giermoment zwischen den innenliegenden und außenliegenden Rädern erzeugt wird, um die Lenkung des Fahrzeuges während eines Bremsvorganges zu unterstützen.

Die Aufgabe der Erfindung besteht deshalb darin, einen Fehlerfall in der Kraftfahrzeuglenkung frühzeitig zu erkennen und bei einer Fehlererkennung die weitere Fahrzeuglenkung zu ermöglichen.

Die Aufgabe wird durch eine Vorrichtung mit den Merkmalen des Patentanspruchs 1 und ein Verfahren mit den Merkmalen des Patentanspruchs 12 gelöst. Vorteilhafte Aus- und Weiterbildungen sind in den Unteransprüchen dargelegt.

Gemäß der Erfindung übernimmt eine bereits im Kraftfahrzeug vorhandene Einrichtung die Notlauffunktion der Lenkeinrichtung, wodurch auf eine redundante Ausführung der Aktuatoren und Steuereinrichtungen der Lenkeinrichtung verzichtet werden kann.

Die den Notlauf übernehmende Einrichtung ist erfindungsgemäß eine im Fahrzeug bereits vorhandene Bremseinrichtung, welche in Abhängigkeit des Lenksollsignals die Räder des Kraftfahrzeuges selektiv mit unterschiedlichen Bremskräften beaufschlagt, wobei eine Fehlererkennungseinrichtung vorgesehen ist, die den Fehlerfall der die Stellung der Räder einstellenden Lenkeinrichtung durch den Vergleich des Lenksollsignals mit Ausgangssignalen von den lenkbaren Rädern zugeordneten Radstellungssensoren efaßt und so im Fehlerfall der Lenkeinrichtung während des Bremsvorganges bis zum Stillstand das Lenkverhalten des Kraftfahrzeuges erzeugt.

Die Größe der definierten Abweichung der Ausgangssignale von den lenkbaren Rädern zugeordneten Radstellungssensoren ist dabei vorzugsweise von der Fahrgeschwindigkeit des Kraftfahrzeuges abhängig.

Wird ein Fehlerfall der Lenkeinrichtung von der Fehlererkennungseinrichtung erkannt, schaltet diese die Lenkeinrichtung ab. Gleichzeitig aktiviert sie die Bremseinrichtung über ein Steuersignal derart, daß die Räder selektiv mit Bremskräften in Abhängigkeit des Lenksollsignals beaufschlagt werden, um die von der durch den Fahrzeugführer bedienbaren Lenkvorgabeeinrichtung oder einer Einrichtung zum automatischen Führen des Kraftfahrzeuges kommandierten Lenkreaktion zu gewährleisten.

Um die Beaufschlagung der Räder mit selektiven Bremskräften steuern zu können, werden die momentanen Bremskräfte an den Rädern erfaßt und der Bremseinrichtung als Istgröße zugeführt. Bei einer hydraulischen Bremseinrichtung werden dazu vorteilhafterweise als Maß für die anliegenden Bremskräfte die in den Rädern zugeordneten Bremszylindern auftretenden Bremsdrücke verwendet. Eine weitere Möglichkeit besteht in der Erfassung der Rad drehzahlen, aus denen die Verzögerung der einzelnen Räder ermittelt wird. Die dafür notwendigen Raddrehzahlsensoren sind meist schon im Kraftfahrzeug vorhanden.

Der Vorteil der Erfindung besteht darin, daß durch die Einbeziehung der im Fahrzeug vorhandenen Bremseinrichtung die Notfunktion der Lenkeinrichtung eine mit üblichen redundanten Systemen aufgebaute Lenkeinrichtung nicht erlangbare Verfügbarkeits- und Sicherheitserhöhung erreicht wird.

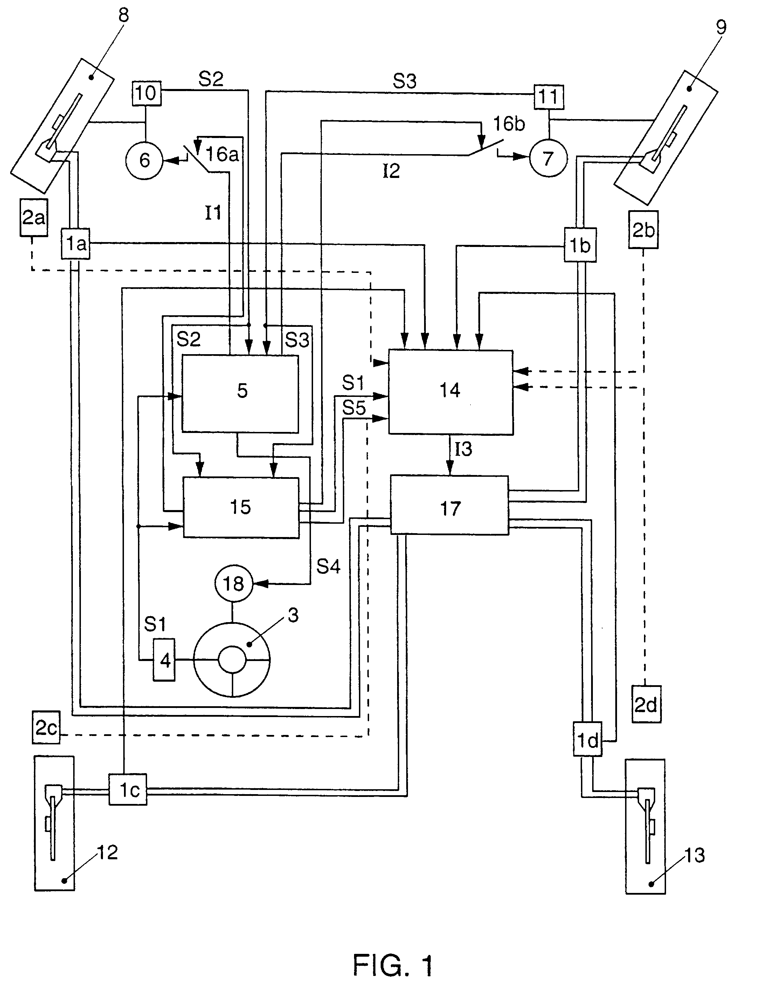

Nachfolgend wird die Erfindung anhand eines Ausführungsbeispiels näher beschrieben. Die Zeichnung zeigt eine schematische Darstellung einer Lenkeinrichtung für ein Kraftfahrzeug mit lenkbaren Fronträdern und eine im Fehlerfall der Lenkeinrichtung zur Erzeugung eines Lenkverhaltens verwendbare Bremseinrichtung.

Die erfindungsgemäße Vorrichtung besteht aus einer Lenkeinrichtung und einer im Normalfall völlig autark arbeitenden Bremseinrichtung. Die Lenkeinrichtung weist im Ausführungsbeispiel eine als Lenkrad 3 ausgebildete Lenkwinkelvorgabbeinrichtung auf, welcher ein Lenkwinkelsensor 4 zugeordnet ist, welcher den Verdrehwinkel des Lenkrades 3 direkt oder indirekt ermittelt. Das Ausgangssignal S1 des Lenkwinkelsensors 4 wird als Lenksollsignal einer elektronischen Steuereinrichtung 5 der Lenkeinrichtung zugeleitet. In Abhängigkeit des Lenksollsignals S1 ermittelt die Steuereinrichtung die Stellgrößen I1 und I2 für die elektrischen Aktuatoren 6 und 7, welche die Position der lenkbaren Räder 8 und 9 zur Erzeugung eines Lenkverhaltens des Kraftfahrzeugs einstellen. Die Radstellungssensoren 10, 11 erfassen die momentane Position der lenkbaren Räder und leiten diese als Istsignal S2, S3 an die Steuereinrichtung 5. Des weiteren erzeugt die Steuereinrichtung 5 ein Signal S4 an einen Aktuator 18, der zur Erzeugung des Lenkgefühls für den Fahrer eine Lenkmomentrückmeldung an das Lenkrad 3 gibt.

Die Bremseinrichtung weist ebenfalls eine Steuereinrichtung 14 auf, die während eines normalen Fahrbetriebes ihr Sollsignal durch die Betätigung des nicht dargestellten Bremspedals und ggf. von dem Steuergerät einer Antiblockierregeleinheit und/oder einer Fahrdynamikregeleinheit erhält. In Abhängigkeit dieses Sollsignals bildet die Steuereinrichtung das Stellsignal I3 für die Aktuatoreinrichtung 17, die im Ausführungsbeispiel hydraulisch arbeitet und entsprechend der aufzubringenden Bremskräfte in den den Rädern zugeordneten Bremszylindern die entsprechenden Bremsdrücke aufbaut.

Weiterhin ist eine Fehlererkennungseinrichtung 15 vorgesehen, welche das Ausgangssignal S2, S3 der Radstellungssensoren 10, 11 ständig mit dem Lenksollsignal S1 vergleicht. Tritt eine Abweichung mindestens eines der Ausgangssignale S2, S3 vom Lenksollsignal S1 auf, die größer ist als eine fahrgeschwindigkeitsabhängige vorgegebene Abweichung ist, spricht die Fehlererkennungseinrichtung an und öffnet die Schalter 16a und 16b, so daß die Aktuatoren 6 und 7 nicht mehr arbeiten. Gleichzeitig aktiviert die Fehlererkennungseinrichtung 15 über das Steuersignal S5 die Steuereinrichtung 14 und stellt das Lenksollsignal S1 an sie durch, die jetzt zur Erzeugung eines Lenkverhaltens bis zum Stillstand des Kraftfahrzeuges in Abhängigkeit des Lenksollsignals S1 und an den Rädern 8, 9, 12, 13 abgegriffener Istsignale das Stellsignal I3 für die Aktuatoreinrichtung 17 der Bremseinrichtung bildet und an diese zur Erzeugung selektiv unterschiedlicher Bremskräfte an den einzelnen Rädern abgibt.

Als Istwerte stehen bei einer hydraulischen Bremseinrichtung die in den einzelnen Rädern zugeordneten Bremszylindern anstehenden Bremsdrücke zur Verfügung, welche über die Drucksensoren 1a - 1d aufgenommen werden.

Eine andere Möglichkeit besteht in der Erfassung der Raddrehzahlen der einzelnen Räder über die Raddrehzahlsensoren 2a - 2d, aus denen die Steuereinrichtung 14 die Verzögerung der einzelnen Räder 8, 9, 12 und 13 ermittelt und als Istsignal verwendet.

### BEZUGSZEICHENLISTE

- 1a - 1d: Drucksensor
- 2a - 2d: Raddrehzahlsensor
- 3: Lenkrad, Lenkwinkelvorgabeeinrichtung
- 4: Lenkwinkelsensor
- 5: Steuereinrichtung
- 6, 7: Aktuatoren
- 8, 9: lenkbares Rad
- 10, 11: Radstellungssensoren
- 12, 13: Räder
- 14: Steuereinrichtung
- 15: Fehlererkennungseinrichtung
- 16a, 16b: Schalter
- 17: Aktuatoreinrichtung
- 18: Aktuator
- S1: Lenksollsignal
- I1, I2: Stellgröße
- S2, S3: Istsignal, Ausgangssignal
- S4: Signal
- 13: Stellgröße
- S5: Steuersignal

## Patentansprüche

1. Vorrichtung zur Lenkung eines Kraftfahrzeuges mit mindestens zwei lenkbaren Rädern, welche eine Lenkeinrichtung zur Einstellung der Position der lenkbaren Räder in Abhängigkeit eines Lenksollsignals und eine Einrichtung zur Erzeugung eines Lenkverhaltens des Kraftfahrzeuges im Fehlerfall der Lenkeinrichtung aufweist wobei die Einrichtung zur Erzeugung eines Lenkverhaltens eine vorhandene Bremseinrichtung ist, **dadurch gekennzeichnet, dass** die Bremseinrichtung im Fehlerfall der Lenkeinrichtung in Abhängigkeit des Lenksollsignals (S1) an den Rädern (8, 9, 12, 13) selektiv unterschiedliche Bremskräfte erzeugt, wobei eine Fehlererkennungseinrichtung (15) vorgesehen ist, die den Fehlerfall der die Stellung der Räder (8, 9) einstellenden Lenkeinrichtung durch den Vergleich des Lenksollsignals (S1) mit Ausgangssignalen (S2, S3) von den lenkbaren Rädern (8, 9) zugeordneten Radstellungssensoren (10, 11) erfasst.

2. Vorrichtung nach Anspruch 1, **dadurch gekennzeichnet, daß** die Lenkeinrichtung die lenkbaren Räder (8, 9) unabhängig voneinander einstellt und die Räder (8, 9) keine Verbindung zueinander aufweisen.

3. Vorrichtung nach Anspruch 1 oder 2, **dadurch gekennzeichnet, daß** die Fehlererkennungseinrichtung (15) bei einer definierten Abweichung der Ausgangssignale (S2, S3) mindestens eines der Radstellungssensoren (10, 11) von dem Lenksollsignal (S1) den Fehlerfall der Lenkeinrichtung erkennt.

4. Vorrichtung nach Anspruch 3, **dadurch gekennzeichnet, daß** die Größe der Abweichung fahrgeschwindigkeitsabhängig ist.

5. Vorrichtung nach einem der Ansprüche 1 bis 4, **dadurch gekennzeichnet, daß** die Fehlererkennungseinrichtung (15) im Fehlerfall der Lenkeinrichtung diese abschaltet und gleichzeitig an die Bremseinrichtung ein Steuersignal (S5) zur Aktivierung der Erzeugung selektiv unterschiedlicher Bremskräfte an den Rädern (8, 9, 12, 13) in Abhängigkeit des Lenksollsignals (S1) abgibt.

6. Vorrichtung nach einem der Ansprüche 1 bis 5, **dadurch gekennzeichnet, daß** den einzelnen Rädern (8, 9, 12, 13) des Kraftfahrzeuges Sensoren (1a - 1d; 2a - 2d) zur Erfassung der an den Rädern momentan anliegenden Bremskräfte zugeordnet sind, deren Ausgangssignale als Istsignale der Bremseinrichtung zuführbar sind.

7. Vorrichtung nach Anspruch 6, **dadurch gekennzeichnet, daß** die Bremseinrichtung eine hydraulisch arbeitende Bremseinrichtung ist und als Maß für die an den Rädern (8, 9, 12, 13) anliegenden Bremskräfte, die in den Rädern zugeordneten Bremszylindern auftretenden Bremsdrücke verwendbar sind.

8. Vorrichtung nach einem der Ansprüche 1 bis 6, **dadurch gekennzeichnet, daß** den einzelnen Rädern (8, 9, 12, 13) des Kraftfahrzeuges Raddrehzahlsensoren (2a - 2d) zugeordnet sind, deren Ausgangssignale der Bremseinrichtung zuleitbar sind, welche aus den Ausgangssignalen die Verzögerung der einzelnen Räder ermittelt und als Istsignal zur Erzeugung der selektiv unterschiedlichen Bremskräfte verwendet.

9. Vorrichtung nach einem der Ansprüche 1 bis 8, **dadurch gekennzeichnet, daß** ein Lenkwinkelsensor (4) einer vom Fahrzeugführer bedienbaren Lenkwinkelvorgabeeinrichtung (3) zur Erfassung des Lenksollsignals (S1) zugeordnet ist.

10. Vorrichtung nach einem der Ansprüche 1 bis 8, **dadurch gekennzeichnet, daß** eine Einrichtung zur Erzeugung eines Lenksollsignals (S1) vorgesehen ist.

11. Vorrichtung nach Anspruch 10, **dadurch gekennzeichnet, daß** die Einrichtung eine Einrichtung zum fahrerlosen Führen des Kraftfahrzeuges ist.

12. Verfahren zur Lenkung eines Kraftfahrzeuges mit mindestens zwei lenkbaren Rädern, bei dem von einer Lenkeinrichtung die Einstellung der Position der Räder zur Erzeugung eines Lenkverhaltens des Kraftfahrzeuges in Abhängigkeit eines Lenksollsignals erfolgt, **dadurch gekennzeichnet, dass** im Fehlerfall der Lenkeinrichtung das Lenkverhalten des Kraftfahrzeuges über die Beaufschlagung der Räder (8, 9, 12, 13) mit selektiv unterschiedlichen Bremskräften in Abhängigkeit des Lenksollsignals bis zum Stillstand des Fahrzeuges erzeugt wird, wobei der Fehlerfall der Lenkeinrichtung in einer Fehlererkennungseinrichtung (15) über einen Vergleich des Lenksollsignals (S1) mit der momentanen Position (S2, S3) mindestens eines der lenkbaren Räder (8, 9) erkannt wird.

13. Verfahren nach Anspruch 12, **dadurch gekennzeichnet, daß** die Beaufschlagung der Räder (8, 9, 12, 13) mit selektiv unterschiedlichen Bremskräften über eine bereits vorhandene Bremseinrichtung erfolgt.

14. Verfahren nach Anspruch 12 oder 13, **dadurch gekennzeichnet, daß** der Fehlerfall der Lenkeinrichtung bei einer definierten Abweichung der Position (S2, S3) mindestens eines der lenkbaren Räder (8, 9) von dem Lenksollsignal (S1) erkannt wird.

15. Verfahren nach Anspruch 14, **dadurch gekennzeichnet, daß** die Größe der Abweichungen fahrgeschwindigkeitsabhängig festgelegt wird.

16. Verfahren nach einem der Ansprüche 12 bis 15, **dadurch gekennzeichnet, daß** die Fehlererkennungseinrichtung (15) bei einem erkannten Fehlerfall der Lenkeinrichtung diese abschaltet und gleichzeitig die Erzeugung selektiv unterschiedlicher Bremskräfte an den Rädern (8, 9, 12, 13) bei der Bremseinrichtung in Abhängigkeit des Lenksollsignals (S1) aktiviert.

17. Verfahren nach einem der Ansprüche 12 bis 16, **dadurch gekennzeichnet, daß** die an den Rädern (8, 9, 12, 13) momentan anliegenden Bremskräfte der Bremseinrichtung als Istsignal zugeführt werden.

18. Verfahren nach Anspruch 17, **dadurch gekennzeichnet, daß** bei einer hydraulischen Bremseinrichtung, die in den Rädern (8, 9, 12, 13) zugeordneten Bremszylindern auftretenden Bremsdrücke als Maß für die anliegenden Bremskräfte verwendet werden.

19. Verfahren nach einem der Ansprüche 2 bis 8, **dadurch gekennzeichnet, daß** die Raddrehzahlen der einzelnen Räder aufgenommen werden, aus den Raddrehzahlen die Verzögerung der Räder ermittelt und als Istsignal der Bremseinrichtung zugeführt wird.

## Claims

1. Apparatus for steering a motor vehicle having at least two steerable wheels, which apparatus has a steering device for setting the position of the steerable wheels as a function of a steering setpoint signal and a device for generating a steering behaviour of the motor vehicle in the event of a fault of the steering device, the device for generating a steering behaviour being a brake device which is present, **characterized in that**, in the event of a fault of the steering device, the brake device generates selectively different braking forces at the wheels (8, 9, 12, 13) as a function of the steering setpoint signal (S1), a fault detection device (15) being provided which senses the fault situation of the steering device which sets the setting of the wheels (8, 9), by comparing the steering setpoint signal (S1) with output signals (S2, S3) from wheel setting sensors (10, 11) which are assigned to the steerable wheels (8, 9).

2. Apparatus according to Claim 1, **characterized in that** the steering device sets the steerable wheels (8, 9) independently of one another, and the wheels (8, 9) do not have any connection to one another.

3. Apparatus according to Claim 1 or 2, **characterized in that** the fault detection device (15) detects the fault situation of the steering device when there is a defined deviation of the output signals (S2, S3) of at least one of the wheel setting sensors (10, 11) from the steering setpoint signal (S1).

4. Apparatus according to Claim 3, **characterized in that** the magnitude of the deviation is dependent on the travel speed.

5. Apparatus according to one of Claims 1 to 4, **characterized in that**, in the event of a fault of the steering device, the fault detection device (15) switches it off and simultaneously outputs a control signal (S5) to the brake device in order to activate the generation of selectively different braking forces at the wheels (8, 9, 12, 13) as a function of the steering setpoint signal (S1).

6. Apparatus according to one of Claims 1 to 5, **characterized in that** the individual wheels (8, 9, 12, 13) of the motor vehicle are assigned sensors (1a - 1d; 2a - 2d) for sensing the braking forces which are present at the wheels at a given time, the output signals of which sensors (1a - 1d; 2a - 2d) can be fed as actual signals to the brake device.

7. Apparatus according to Claim 6, **characterized in that** the brake device is a hydraulically operating brake device and the braking pressures which occur in brake cylinders assigned to the wheels can be used as a measure of the braking forces which are present at the wheels (8, 9, 12, 13).

8. Apparatus according to one of Claims 1 to 6, **characterized in that** the individual wheels (8, 9, 12, 13) of the motor vehicle are assigned wheel speed sensors (2a - 2d) whose output signals can be fed to the brake device which determines the deceleration of the individual wheels from the output signals and uses it as an actual signal for generating the selectively different braking forces.

9. Apparatus according to one of Claims 1 to 8, **characterized in that** a steering angle sensor (4) is assigned to a steering angle predefining device (3) which can be operated by the driver of the vehicle and has the purpose of sensing the steering setpoint signal (S1).

10. Apparatus according to one of Claims 1 to 8, **characterized in that** a device for generating a steering setpoint signal (S1) is provided.

11. Apparatus according to Claim 10, **characterized in that** the device is a device for driving the motor vehicle without a driver.

12. Method for steering a motor vehicle having at least two steerable wheels, in which a steering device sets the position of the wheels as a function of a steering setpoint signal, in order to generate a steering behaviour of the motor vehicle, **characterized in that**, in the event of a fault of the steering device, the steering behaviour of the motor vehicle is brought about by applying selectively different braking forces to the wheels (8, 9, 12, 13) as a function of the steering setpoint signal until the vehicle comes to a standstill, the fault situation of the steering device being detected in a fault detection device (15) by comparing the steering setpoint signal (S1) with the position (S2, S3) of at least one of the steerable wheels (8, 9) at a given time.

13. Method according to Claim 12, **characterized in that** selectively different braking forces are applied to the wheels (8, 9, 12, 13) by means of a brake device which is already present.

14. Method according to Claim 12 or 13, **characterized in that** the fault situation of the steering device is detected when there is a defined deviation of the position (S2, S3) of at least one of the steerable wheels (8, 9) from the steering setpoint signal (S1).

15. Method according to Claim 14, **characterized in that** the magnitude of the deviations are defined as a function of the travel speed.

16. Method according to one of Claims 12 to 15, **characterized in that** the fault detection device (15) switches off the steering device when a fault situation of the steering device is detected, and simultaneously activates, at the brake device, the generation of selectively different braking forces at the wheels (8, 9, 12, 13) as a function of the steering setpoint signal (S1).

17. Method according to one of Claims 12 to 16, **characterized in that** the braking forces which are present at the wheels (8, 9, 12, 13) at a given time are fed as an actual signal to the brake device.

18. Method according to Claim 17, **characterized in that**, in the case of a hydraulic brake device, the braking pressures which occur in brake cylinders assigned to the wheels (8, 9, 12, 13) are used as a measure of the braking forces which are present.

19. Method according to one of Claims 12 to 18, **characterized in that** the wheel speeds of the individual wheels are sensed, and the deceleration of the wheels is determined from the wheel speeds and is fed as an actual signal to the brake device.

## Revendications

1. Dispositif de direction d'un véhicule automobile avec au moins deux roues motrices, lequel est muni d'un système de direction pour le réglage de la position des roues motrices en fonction d'un signal de direction théorique, et d'un système de génération d'un comportement de direction du véhicule automobile en cas de défaut du système de direction, le système de génération d'un comportement de direction étant un système de freinage existant, **caractérisé en ce qu'**en cas de défaut du système de direction, le système de freinage génère sur les roues (8, 9, 12, 13) des forces de freinage sélectivement différentes, en fonction du signal de direction théorique (S1), un système de détection des défauts (15)étant prévu, lequel détecte le cas de défaut du dispositif de direction réglant la position des roues (8, 9), par comparaison du signal de direction théorique (S1) avec des signaux de sortie (S2, S3) de capteurs de position des roues (10, 11) associés aux roues motrices (8, 9).

2. Dispositif selon la revendication 1, **caractérisé en ce que** le dispositif de direction règle les roues motrices (8, 9) indépendamment l'une de l'autre et **en ce que** les roues (8, 9) ne présentent aucune liaison entre elles.

3. Dispositif selon la revendication 1 ou 2, **caractérisé en ce qu'**en cas d'un écart défini des signaux de sortie (S2, S3) d'au moins l'un des capteurs de position des roues (10, 11) par rapport au signal de direction théorique (S1), le système de détection des défauts (15) détecte le cas de défaut du dispositif de direction.

4. Dispositif selon la revendication 3, **caractérisé en ce que** la dimension de l'écart dépend de la vitesse de conduite.

5. Dispositif selon l'une quelconque des revendications 1 à 4, **caractérisé en ce qu'**en cas de défaut du dispositif de direction, le système de détection des défauts (15) déconnecte ce dernier et délivre simultanément au système de freinage un signal de commande (S5) pour l'activation de la génération de forces de freinage sélectivement différentes sur les roues (8, 9, 12, 13), en fonction du signal de direction théorique (S1).

6. Dispositif selon l'une quelconque des revendications 1 à 5, **caractérisé en ce que** des capteurs (1a à 1d ; 2a à 2d) pour la détection des forces de freinage momentanément appliquées aux roues, dont les signaux de sortie peuvent être amenés au système de freinage en tant que signaux réels, sont associés à chaque roue (8, 9, 12, 13) du véhicule automobile.

7. Dispositif selon la revendication 6, **caractérisé en ce que** le système de freinage est un système de freinage à fonctionnement hydraulique et **en ce que** les pressions de freinage apparaissant aux cylindres de freinage associés aux roues sont utilisables en tant que dimension des forces de freinage appliquées aux roues (8, 9, 12, 13).

8. Dispositif selon l'une quelconque des revendications 1 à 6, **caractérisé en ce que** des capteurs de vitesse de rotation des roues (2a à 2d), dont les signaux de sortie peuvent être amenés au système de freinage, qui à partir des signaux de sortie détermine la temporisation de chaque roue et les utilise en tant que signaux réels pour la génération des forces de freinage sélectivement différentes, sont affectés à chaque roue (8, 9, 12, 13) du véhicule automobile.

9. Dispositif selon l'une quelconque des revendications 1 à 8, **caractérisé en ce qu'**un capteur d'angle de direction (4) est associé à un système de prescription de l'angle de direction (3) pilotable par le conducteur du véhicule, pour la détection du signal de direction théorique (S1).

10. Dispositif selon l'une quelconque des revendications 1 à 8, **caractérisé en ce qu'**un système de génération d'un signal de direction théorique (S1) est prévu.

11. Dispositif selon la revendication 10, **caractérisé en ce que** le système est un système de pilotage automatique du véhicule automobile.

12. Procédé de direction d'un véhicule automobile avec au moins deux roues motrices, dans lequel un système de direction assure le réglage de la position des roues pour générer un comportement de direction du véhicule automobile en fonction d'un signal de direction, **caractérisé en ce qu'**en cas de défaut du système de direction, le comportement de direction du véhicule automobile est généré par application sur les roues (8, 9, 12, 13) de forces de freinage sélectivement différentes, en fonction du signal de direction théorique, jusqu'à l'arrêt du véhicule, le cas de défaut du système de direction étant détecté dans un système de détection des défauts (15), par comparaison du signal de direction théorique (S1) avec la position momentanée (S2, S3) d'au moins l'une des roues motrices (8, 9).

13. Procédé selon la revendication 12, **caractérisé en ce que** l'application de forces de freinage sélectivement différentes sur les roues (8, 9, 12, 13) est assurée par un système de freinage préalablement existant.

14. Procédé selon la revendication 12 ou 13, **caractérisé en ce que** le cas de défaut du système de direction est détecté en cas d'un écart défini de la position (S2, S3) d'au moins l'une des roues motrices (8, 9) par rapport au signal de direction théorique (S1).

15. Procédé selon la revendication 14, **caractérisé en ce que** la dimension des écarts est définie en fonction de la vitesse de conduite.

16. Procédé selon l'une quelconque des revendications 12 à 15, **caractérisé en ce qu'**en cas de détection d'un défaut sur le système de direction, le système de détection des défauts (15) déconnecte ce dernier et active simultanément la génération de forces de freinage sélectivement différentes sur les roues (8, 9, 12, 13) par le système de freinage, en fonction du signal de direction théorique (S1).

17. Procédé selon l'une quelconque des revendications 12 à 16, **caractérisé en ce que** les forces de freinage momentanément appliquées sur les roues (8, 9, 12, 13) sont amenées au système de freinage en tant que signal réel.

18. Procédé selon la revendication 17, **caractérisé en ce que** si le système de freinage est hydraulique, les pressions de freinage apparaissant dans les cylindres de frein associés aux roues (8, 9, 12, 13) sont utilisées en tant que dimensions pour les forces de freinage appliquées.

19. Procédé selon l'une quelconque des revendications 12 à 18, **caractérisé en ce que** les vitesses de rotation de chaque roue sont enregistrées, la temporisation des roues est déterminée à partir des vitesses de rotation des roues et amenée au système de freinage en tant que signal réel.
